# EUROPEAN PATENT APPLICATION

(11) **EP 1 580 324 A1**
(43) Date of publication of application: **28.09.2005**
(21) Application number: 05075665.9
(22) Date of filing: 21.03.2005
(51) Int. Cl.: E02D 5/52, F16L 13/14

(54) **Tensile strengthened connection of pipes**

(30) Priority: 26.03.2004 NL 1025832
(71) Applicant: Franki Grondtechnieken B.V., 4906 CX Oosterhout (NL)
(72) Inventor: De Kort, Petrus Johannes Cornelius Maria, 4904 VA Oosterhout (NL)
(74) Representative: Tabeling, Marcella M.J.

(57) **Abstract**

Method for connecting pipes (1,2) in a tensile strengthened manner, wherein the ends of the pipes (1,2) to be connected are flared, the flared pipe ends (3,4) are placed against each other, a first pipe piece (7) with a length greater than the total length of the two flares (3,4) is placed over the flared pipe ends (3,4), and the diameter of at least the outer parts of the first pipe piece (7) is reduced, and the use of the method for anchoring a construction in the ground, and an assembly of pipes (1,2) connected in a tensile strengthened manner.

## Description

The present invention relates to a method for connecting pipes in a tensile strengthened manner, the use of the method and an assembly of pipes connected in tensile strengthened manner for anchoring a construction in the ground.

An anchoring system consisting of pipes is used to anchor constructions such as sheet-pilings in the ground. The pipes are placed successively in the ground to a location where hard, load-bearing ground is situated. The pipes are carried into the ground by means of driving, vibration or rotation. The pipes connected must have resistance to tensile strain so that they provide a good anchoring for the construction in the ground. Use is often made of a screwed connection to connect these pipes. The pipe ends are provided with screw thread, wherein a part of the diameter of the pipe ends is cut away. The strength of the connection is reduced by cutting away a part of the diameter of the pipe ends. In addition, the cutting of thread must take place in a workshop.

The present invention has for its object to provide an improved method for connecting pipes in a tensile strengthened manner, wherein pipes can be processed on site and a strong connection between the pipes having a high tensile strength is obtained.

According to the invention there is provided for this purpose a method for connecting pipes in a tensile strengthened manner, wherein the ends of the pipes to be mutually connected are flared, the flared pipe ends are placed against each other, an outer pipe piece with a length greater than the total length of the two flares is placed over the flared pipe ends, and the diameter of at least the outer parts of the outer pipe piece is reduced. Reducing the diameter of the outer pipe piece can take place by means of pressing. After pressing, the outer pipe piece has an inner diameter close to its ends which is smaller than the outer diameter of the flared pipe ends. When the pipes come under tensile strain, the outer pipe piece therefore prevents the pipes coming apart.

Flaring of the pipe ends can be carried out beforehand or on site. The flared pipe ends can be placed against each other, whereafter a pipe piece is pushed over the flared pipe ends, or the pipe piece is first pushed over a flared pipe end before the flared ends of the pipes for mutually connecting are placed against each other. It is even possible to press a pipe piece onto each flared pipe end of a pipe before the flared pipe ends of two pipes to be mutually connected are placed against each other, and the still free end of the pipe piece is pressed round the pipe to be connected thereto.

An internal pipe piece can be inserted into the flared pipe ends for guiding purposes. The outer diameter of the internal pipe piece is preferably practically equal to or slightly smaller than the inner diameter of the flared pipe ends.

The strength of the connection can be increased further by providing the surface between the outer parts of the outer pipe piece and the pipes with friction-increasing means. The surface in question can be roughened or be provided with protrusions or indentations, during pressing or beforehand.

In order to increase the tensile strength of the connection an adhesive, for instance glue, can also be applied between the outer parts of the outer pipe piece and the pipes.

In order to transmit a rotating movement between the pipes, for instance when the pipe must be rotated into the ground, the flared pipe ends can be provided with axial recesses. When the flared pipe ends are placed against each other, the recesses and the protruding peripheral parts slot into each other, whereby a rotating movement can be transmitted.

The invention further relates to the use of the above described method for anchoring a construction in the ground.

Finally, the invention also relates to an assembly of pipes mutually connected in a tensile strengthened manner for anchoring a construction in the ground, comprising pipes provided with flared ends which are placed against each other, and outer pipe pieces arranged over two flared pipe ends at a time and each with a length greater than the total length of the two flares, wherein the inner diameter of the outer parts of each outer pipe piece is smaller than the outer diameter of the flared pipe ends.

The main advantage of the method according to the invention is that it can carried out quickly and on site in a pit excavation. Another advantage is that the full diameter contributes toward realizing the connection.

The invention will be further elucidated with reference to the annexed drawings. The drawings show an exemplary embodiment of the method according to the invention, in which
Figure 1 shows a first step of the method in perspective view,
Figure 2 shows a second step,
Figure 3 shows a third step in cross-sectional view, and
Figure 4 shows in cross-section the final result of the method.

In the drawings reference numeral 1 designates a first pipe and reference numeral 2 designates a second pipe. On the ends to be mutually connected both pipes are provided with a respective flared pipe end 3, 4. The flared pipe ends 3, 4 are provided with axial recesses 5. Finally, reference numeral 6 designates an inner pipe piece and reference numeral 7 designates an outer pipe piece.

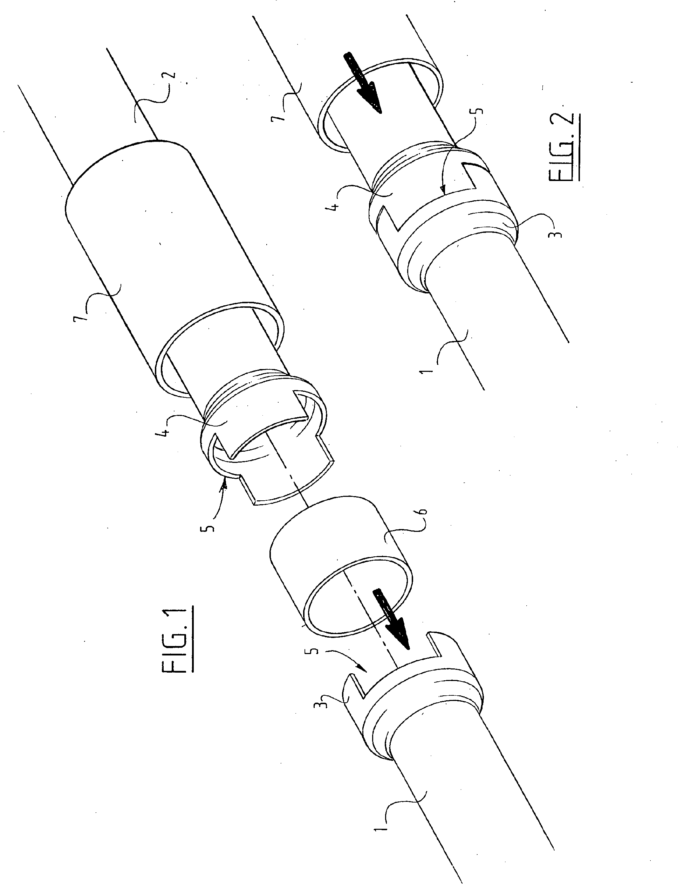

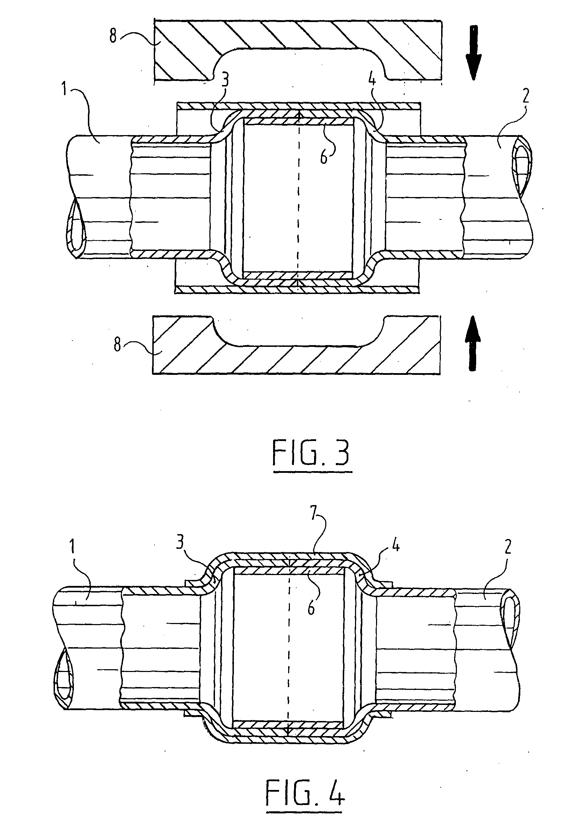

It is otherwise noted that the pipe ends shown in figures 3 and 4 are not provided with axial recesses 5 as shown in figures 1 and 2.

In order to establish a a tensile strengthened mutual connection of pipes 1, 2, the ends of pipes 1, 2 to be mutually connected are flared. The flared pipe ends 3, 4 are placed against each other (see figure 2) and an outer pipe piece with a length greater than the total length of the two flared pipe ends 3, 4 (see figure 3) is placed over the flared pipe ends 3, 4. The a tensile strengthened connection between pipes 1, 2 is finally brought about by reducing the diameter of at least the outer parts of outer pipe piece 7 (see figure 4).

As shown in figure 3, the reduction in the diameter of outer pipe piece 7 can take place by means of pressing, wherein pressing members 8 are used. It can be clearly seen in figure 4 that, after pressing, the outer ends of the outer pipe piece 7 have an inner diameter which is smaller than the outer diameter of the flared pipe ends 3, 4. The a tensile strengthened connection is hereby realized.

For guiding of the pipes relative to each other when the flared pipe ends 3, 4 are placed against each other, the inner pipe piece 6 can be inserted into one of the flared pipe ends 3, 4 before pipe ends 3, 4 are placed against each other (see figure 1).

Although not shown in the drawings, it is further possible to roughen the surface between outer pipe piece 7 and the pipes for connecting or to provide this surface with protrusions and/or indentations during pressing (figure 3) or beforehand, in order to increase the strength of the connection. Instead or in addition, a glue or other product can also be applied between said parts to increase the tensile strength of the connection.

The pipes thus connected to each other are carried into the ground by means of driving, vibration or rotation to a location where hard, load-bearing ground is situated, for the purpose of anchoring for instance a sheet piling or other construction in the ground. A steel cable or steel rod can then be inserted through the thus-formed pipe and, depending on the amount of load-bearing capacity required here, a hardened liquid can also be introduced. When the pipes must be inserted into the ground by means of rotation, the flared pipe ends 3, 4 are preferably provided with axial recesses 5 (figures 1 and 2).

Finally, it is further noted that the inner diameter of outer pipe piece 7 is practically the same as or is slightly larger than the outer diameter of the flared pipe ends. The outer diameter of inner pipe piece 6 is preferably practically the same as or slightly smaller than the inner diameter of flared pipe ends 3, 4.

## Claims

1. Method for connecting pipes in a tensile strengthened manner, wherein
(i) the ends of the pipes to be mutually connected are flared,
(ii) the flared pipe ends are placed against each other,
(iii) an outer pipe piece with a length greater than the total length of the two flares is placed over the flared pipe ends, and
(iv) the diameter of at least the outer parts of the first pipe piece is reduced.

2. Method as claimed in claim 1, wherein (i) after flaring of the ends of the pipes to be connected, (iii') the first pipe piece is placed over the flared pipe end of a first pipe before (ii') the flared end of a second pipe is placed against the flared end of the first pipe.

3. Method as claimed in claim 1, wherein (i) after flaring of the ends of the pipes to be connected, (iii') the first pipe piece is placed over the flared pipe end of a first pipe and (iv') the diameter of at least the outer part of the first pipe piece located round the first pipe is reduced before (ii') the flared end of the second pipe is placed against the flared end of the first pipe, and (iv') the diameter of at least the outer part of the first pipe piece located round the second pipe is reduced.

4. Method as claimed in any of the foregoing claims, wherein reducing the diameter of the first pipe piece takes place by pressing.

5. Method as claimed in any of the foregoing claims, wherein a second pipe piece is inserted into the flared pipe ends before the pipes are placed against each other.

6. Method as claimed in any of the foregoing claims, wherein the surface between the outer parts of the first pipe piece and the pipes is provided with friction-increasing means.

7. Method as claimed in any of the foregoing claims, wherein an adhesive is applied between the outer parts of the first pipe piece and the pipes.

8. Method as claimed in any of the foregoing claims, wherein the flared pipe ends are provided with axial recesses.

9. Use of the method as claimed in any of the foregoing claims for anchoring a construction in the ground.

10. Assembly of pipes connected in a tensile strengthened manner for anchoring a construction in the ground, comprising pipes provided with flared ends which are placed against each other, and first pipe pieces each arranged over two flared pipe ends and each with a length greater than the total length of the two flares, wherein the inner diameter of the outer parts of each first pipe piece is smaller than the outer diameter of the flared pipe ends.
